**Europäisches Patentamt**

**European Patent Office**

**Office européen des brevets**

(19)

(11) Veröffentlichungsnummer: **0 149 096**
**B1**

(12) # EUROPÄISCHE PATENTSCHRIFT

(45) Veröffentlichungstag der Patentschrift:
**22.06.88**

(51) Int. Cl.⁴: **H 04 M 1/72,** H 04 M 1/02

(21) Anmeldenummer: **84114713.5**

(22) Anmeldetag: **04.12.84**

(54) **Kassette zur Stromversorgung eines schnurlosen Fernsprechers.**

(30) Priorität: **22.12.83 DE 3346521**

(43) Veröffentlichungstag der Anmeldung:
**24.07.85 Patentblatt 85/30**

(45) Bekanntmachung des Hinweises auf die Patenterteilung:
**22.06.88 Patentblatt 88/25**

(84) Benannte Vertragsstaaten:
**AT BE CH DE FR GB IT LI LU NL SE**

(56) Entgegenhaltungen:
**US - A - 4 272 655**
**US - A - 4 332 981**

(73) Patentinhaber: **Siemens Aktiengesellschaft Berlin und München, Wittelsbacherplatz 2, D-8000 München 2 (DE)**

(72) Erfinder: **Grassl, Erwin, Drygalski-Allee 111, D-8000 München 71 (DE)**
Erfinder: **Hansbauer, Hermann, Ing.(grad.), Kaspar-Kerll-Strasse 22/I, D-8000 München 60 (DE)**

## Beschreibung

Die Erfindung betrifft eine Kassette zur Aufnahme von Batterien zur Stromversorgung eines schnurlosen Fernsprechers.

Üblicherweise werden der Stromversorgung dienende Batterien elektrischer Geräte z.B. Geräte aus der Unterhaltungselektronik in Kammern des Gerätes eingelegt und anschliessend mittels eines aufschraubbaren oder aufrastbaren und de Aussenkonturen des Gerätes angepassten Deckels abgedeckt. Es ist weiterhin eine Anordnung bekannt, bei der die Batterien in einem Aufnahmekörper angeordnet werden, der anschliessend in einen Schacht des Gehäuses eingeschoben und mit dem Gehäuse verrastet wird.

Ausgehend von dieser letztgenannten Ausführungsform ist es Aufgabe der vorliegenden Erfindung, diesen Aufnahmekörper so weiterzubilden, dass er einfach auswechselbar ist sowie verschiedene Schaltfunktionen ausführen kann.

Durch die US-PS 4 332 981 ist zwar ein schnurloses Telefon bekannt, das ein verschiebbares Mikrofon aufweist, das mit einem Schieber verbunden ist.

Je nach der Stellung des Mikrofons und damit auch des Schiebers ist die Stromversorgung eingeschaltet oder unterbrochen. Durch diese Ausführung kann jedoch die der Erfindung zugrunde liegende Aufgabe nicht gelöst werden.

Gemäss der Erfindung wird die Aufgabe dadurch gelöst, dass die Kassette in einer Ausnehmung des Fernsprechergehäuses verschiebbar sowie auswechselbar gelagert und geführt ist, dass in einer ersten eingeschobenen Stellung durch am Fernsprechergehäuse und der Kassette vorgesehene Rastelemente eine definierte Schaltstellung zur Einschaltung der Stromversorgung gegeben ist, dass in einer weiteren Ausziehrichtung verschobenen Stellung ein weiteres am Fernsprechergehäuse angeordnetes Rastelement wirksam wird, das eine weitere definierte Lage der Kassette bestimmt, in der die Stromversorgung ausgeschaltet ist und dass schliesslich die Rastung durch Verschwenken eines der Rastelemente aufhebbar ist, so dass die Kassette aus der Ausnehmung entnehmbar ist.

Um eine ständige Betriebsbereitschaft von schnurlosen Telefonen zu erreichen, müssen die Batterien zur Stromversorgung nach einer gewissen Betriebszeit gegen neue bzw. aufgeladene ersetzt werden. Um das einzelne Einsetzen der Batterien sich zu ersparen, sind diese in einer Kassette untergebracht, die zusätzliche zur Auswechselbarkeit auch noch Schaltfunktionen ausführen kann. Damit können weitere Betätigungsmittel wie das Mikrofon mit Schieber nach der obengenannten US-Patentschrift entfallen.

Eine Erleichterung beim Herausziehen oder Einschieben der Kassette wird dadurch erreicht, dass sowohl der betreffende in Einschieb- als auch in Ausziehrichtung vorgesehene Nocken jeweils in den einander abgewandten Bereichen eine Auflaufschräge aufweist.

Gemäss einer bevorzugten Ausführungsform kann die Rastnase Teil eines in der Kassette schwenkbar gelagerten Hebels sein, der an seinem freien Ende eine von aussen zugängliche Handhabe aufweist.

Dadurch wird in einfacher Weise durch Lösen der Rastverbindung ein komplettes Herausziehen der Kassette aus der beispielsweisen U-förmigen Ausnehmung erreicht. Dabei kann die Kassette ersetzt oder aufgeladen werden.

Die Erfindung soll im folgenden anhand eines Ausführungsbeispiels näher erläutert werden.

Es zeigt

Fig. 1 eine geschnittene Ansicht durch den in der Station gehaltene Kassette

Fig. 2 ein Detail der Anordnung nach Fig. 1.

Bei der in den Figuren dargestellten Ausführungsform ist in einer Ausnehmung U-förmigen Querschnitts des Gehäuses 2 einer Fernsprechstation eine Kassette 3 angeordnet. Diese Kassette 3 nimmt die Stromversorgung der Fernsprechstation dienenden hier nicht dargestellten Batterien auf. Die Kassette 3 ist innerhalb der Ausnehmung verschiebbar geführt und gelagert und kann auch aus der Ausnehmung 2 in Pfeilrichtung A entnommen werden. Die Kassette 3 kann innerhalb der Ausnehmung in zwei Stellungen definierte Stellungen bewegt werden. In der hier dargestellten ersten Stellung ist die Stromversorgung der Fernsprechstation sichergestellt, während in einer zweiten Stellung die Stromversorgung unterbrochen ist. Diese zweite Stellung wird durch Verschieben der Kassette in Pfeilrichtung A um den Weg x erreicht. Eine Arretierung der Kassette in dieser zweiten Stellung wird durch den Hebel 4 erreicht, der mit einer Nase 5 durch eine Öffnung 25 einer Abdeckplatte 24 zwischen zwei im Gehäuseboden 8 angeordneten Nocken 6, 7 verrastend eingreift. Dieser Hebel 4 zwischen zwei eine Kammer bildenden Stegen in der Kassette schwenkbar gelagert, wobei der mit einem Auge 10 in eine entsprechende Aussparung der Stege eingreift, wodurch die Lagerstelle gebildet ist. Der Hebel steht unter dem Einfluss einer Feder 11, die einmal in einem Sackloch 12 in der Kassette 3 und auf einem mit dem Hebel 4 einstückig verbundenen Stift 13 geführt ist. Der Hebel weist eine winkelförmige Handhabe 15 auf, die im Randbereich der Kassette in einer Aussparung 14 zugänglich ist. Aus der weiteren Stellung lässt sich (B) die Kassette gänzlich aus der Ausnehmung durch Betätigen der Handhabe 15 in Richtung des Pfeiles B entfernen. Die beiden Nocken 6, 7 besitzen, um das Einschieben bzw. das Herausziehen der Kassette zu erleichtern, Anlaufschrägen 16, 17, wobei zur Erleichterung der Handhaben ein Teil des aussen befindlichen Bereiches der Kassette 3 mit einer Riffelung 18 versehen ist.

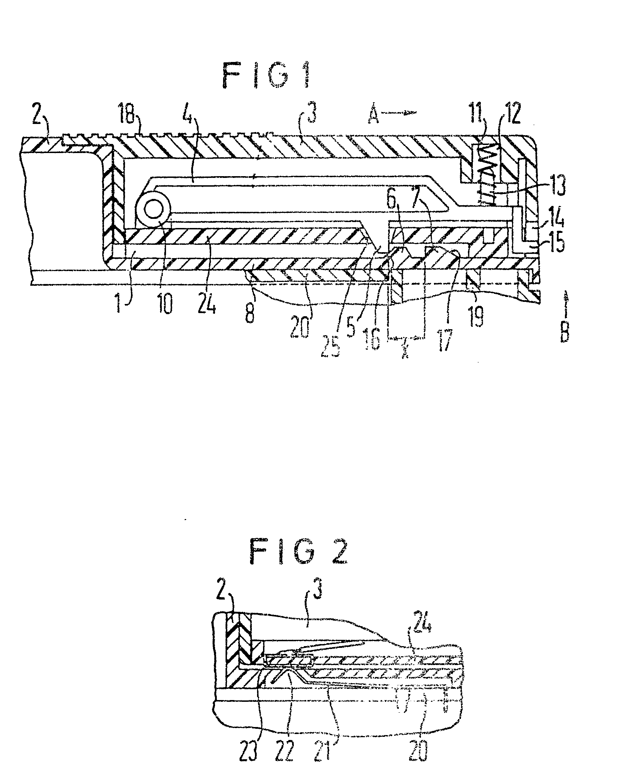

In Fig. 1 ist weiterhin ein zweites Gehäuseteil 19 der Station angedeutet, in dem die Leiterplatte 20 angeordnet ist.

Mit der Leiterplatte 20 sind Kontaktfedern 21 verbunden, die durch Durchbrüche 22 durch das Gehäuseteil 2 hindurchragen und auf entsprechende in der Kassette 3 angeordnete Kontaktstreifen 23 einwirken. Diese Kontaktstreifen 23 sind an einer Abdeckplatte 24 angeordnet, wobei die Abdeckplatte 24 nach Aufnahme oder zum Auswechseln der Batterien verrastbar mit der Kassette 3 verbunden ist.

**Patentansprüche**

1. Kassette zur Aufnahme von Batterien zur Stromversorgung eines schnurlosen Fernsprechers, dadurch gekennzeichnet, dass die Kassette (3) in einer Ausnehmung des Fernsprechergehäuses verschiebbar sowie auswechselbar gelagert und geführt ist, dass in einer ersten eingeschobenen Stellung durch am Fernsprechergehäuse (2) und der Kassette (3) vorgesehene Rastelemente (5, 6) eine definierte Schaltstellung zur Einschaltung der Stromversorgung gegeben ist, dass in einer weiteren in Ausziehrichtung verschobenen Stellung ein weiteres am Fernsprechergehäuse angeordnetes Rastelement (7) wirksam wird, das eine weitere definierte Lage der Kassette bestimmt, in der die Stromversorgung ausgeschaltet ist und dass schliesslich die Rastung durch Verschwenken eines der Rastelemente aufhebbar ist, so dass die Kassette aus der Ausnehmung entnehmbar ist.

2. Kassette nach Anspruch 1, dadurch gekennzeichnet, dass am Gehäuse (2) Nocken (6, 7) vorgesehen sind, zwischen die eine in der Kassette (3) angeordnete und unter Federvorspannung verschiebbare Rastnase (5) eingreift.

3. Kassette nach Anspruch 2, dadurch gekennzeichnet, dass sowohl der betreffende in Einschieb- als auch in Ausziehvorrichtung vorgesehene Nocken (6, 7) jeweils in den einander abgewandten Bereichen eine Auflaufschräge (16, 17) aufweist.

4. Kassette nach Anspruch 2, dadurch gekennzeichnet, dass die Rastnase (5) Teil eines in der Kassette (3) schwenkbar gelagerten Hebels (4) ist, der an seinem freien Ende eine von aussen zugängliche Handhabe (15) aufweist.

**Revendications**

1. Cassette destinée à loger des piles servant à l'alimentation en courant d'un téléphone sans fil, caractérisée par le fait que la cassette (3) est montée et guidée, de manière à être déplaçable et interchangeable, dans un évidement du boîtier du téléphone, que, dans une première position rétractée, une position définie de commutation pour le branchement de l'alimentation en courant est fournie par des organes d'encliquetage prévus sur le boîtier (2) du téléphone et sur la cassette (3), que, dans une autre position déplacée dans la direction d'extraction, un autre organe d'encliquetage (7), qui est monté sur le boîtier du téléphone et détermine une autre position définie de la cassette, dans laquelle l'alimentation en curant est interrompue, devient actif, et qu'enfin l'état encliqueté peut être supprimé par basculement de l'un des organes d'encliquetage, de sorte que la cassette peut être enlevée de l'évidement.

2. Cassette suivant la revendication 1, caractérisée par le fait que sur le boîtier (2) il est prévu des cames (6, 7), entre lesquelles s'engage un bec d'encliquetage (5) qui est disposé dans la cassette (3) et est déplaçable sous la précontrainte d'un ressort.

3. Cassette suivant la revendication 2, caractérisée par le fait que les cames considérées (6, 7), qui sont prévues respectivement dans la direction d'insertion et dans la direction d'enlèvement possèdent chacune, dans des zones tournées à l'opposé l'une de l'autre, une rampe de montée (16, 17).

4. Cassette suivant la revendication 2, caractérisée par le fait que le bec d'encliquetage (5) fait partie d'un levier (4) qui est monté de manière à pouvoir pivoter sur la cassette (3) et dont l'extrémité libre porte une manette (15) accessible de l'extérieur.

**Claims**

1. Cartridge for reception of batteries for the power supply of a cordless telephone, characterized in that the cartridge (3) is supported and guided in a compartment in the telephone housing so as to be displaceable and also exchangeable, that in a first, inserted position a defined switching position, for switching on the power supply, is brought about by means of latching elements (5, 6) provided on the telephone housing (2) and on the cartridge (3), that in a further position, displaced in the direction of withdrawal, a further latching element (7) arranged on the telephone housing becomes effective, which determines a further defined position of the cartridge, in which the power supply is switched off, and that finally the latching can be released by swinging away one of the latching elements, so that the cartridge can be removed from the compartment.

2. Cartridge according to Claim 1, characterized in that detents (6, 7) are provided on the housing (2), between which there engages a latching nose (5) which is arranged in the cartridge (3) and which is displaceable under pre-loading by a spring.

3. Cartridge according to Claim 2, characterized in that the detents (6, 7) relating both to the insertion and withdrawal direction each have a bevelled shoulder (16, 17) in the regions facing away from each other.

4. Cartridge according to Claim 2, characterized in that the latching nose (5) is part of a lever (4) which is pivotally mounted in the cartridge, and which has on its free end a handle (15) which is externally accessible.

FIG 1

FIG 2